# EUROPEAN PATENT SPECIFICATION

(11) **EP 1 369 007 B1**
(45) Date of publication and mention of the grant of the patent: **09.04.2008**
(21) Application number: 03076216.5
(22) Date of filing: 28.04.2003
(51) Int. Cl.: A01B 51/02, A01B 33/06, A01B 69/00

(54) **A device for autonomously performing a soil preparation**
Vorrichtung zur autonomen Bodenbearbeitung
Dispositif autonome pour le travail du sol

(30) Priority: 06.06.2002 NL 1020791
(43) Date of publication of application: 10.12.2003
(73) Proprietor: Lely Enterprises AG, 6300 ZUG (CH)
(72) Inventor: van den Berg, Karel, 2971 BR Bleskensgraaf (NL); Miedema, Theo Jan, 2676 VB Maasdijk (NL); van Kuilenberg, Jan Martinus, 4014 PV Wadenoyen (NL); Noordam, Jacco, 2676 BH Maasdijk (NL)
(74) Representative: Corten, Maurice Jean F.M.

(56) References cited:
- EP-A- 0 419 388
- DE-A- 1 914 315
- DE-A- 3 221 535
- DE-A- 3 317 626
- DE-A- 19 919 745
- DE-A- 19 921 105
- FR-A- 1 540 906
- NL-A- 8 005 068
- US-A- 5 377 106

## Description

The invention relates to a device for autonomously performing a soil preparation.

Such devices are known per se (see e.g. FR-A-1540906).

The invention aims at providing a device for autonomously performing a soil preparation, which device has a high degree of manoeuvrability.

For this purpose the invention, according to a first aspect, provides a device for autonomously performing a soil preparation, which device can be displaced autonomously, the device being provided with a wheel for driving and steering the device and with a harrow-unit for harrowing the soil, characterized in that the device comprises only one wheel. Due to the fact that the harrow-unit bears at least partially on the ground, said harrow-unit is capable of ensuring the support of the device, said one wheel ensuring the drive and the steering of the device in order that a high degree of manoeuvrability is obtained.

The harrow-unit is preferably provided with a packer roller that is subdivided into a number of packer-roller-units that are rotatable separately from each other. In case of a change of direction of the device, it is thus possible for the packer roller to follow the change of direction in a simple manner, which still further improves the manoeuvrability.

The harrow-unit is preferably provided with a rotary harrow.

In an embodiment of a device according to the invention, the device is provided with a sowing-unit for sowing seed. It is thus possible to perform both the soil preparation and the sowing in one working run.

The device is preferably provided with protecting means for protecting the device.

In an embodiment of a device according to the invention, the device is provided with a position-determining system for determining the position of the device, with a boundary-detecting system for detecting a boundary of prepared soil, and with a control device for controlling the device with the aid of data from the position-determining system and/or the boundary-detecting system.

In order to be able correctly to control the device depending on particular values of preparation-relevant parameters, in an embodiment of a device according to the invention the device is provided with at least one measuring-unit for measuring a property chosen from the group consisting of: device-related parameters and environment-related parameters. The control device is in particular provided with an input device for inputting data.

An embodiment of a device according to the invention will be explained hereinafter in further detail with reference to the drawing, in which:
Figure 1 shows schematically in plan view a device for performing a soil preparation according to the invention, and

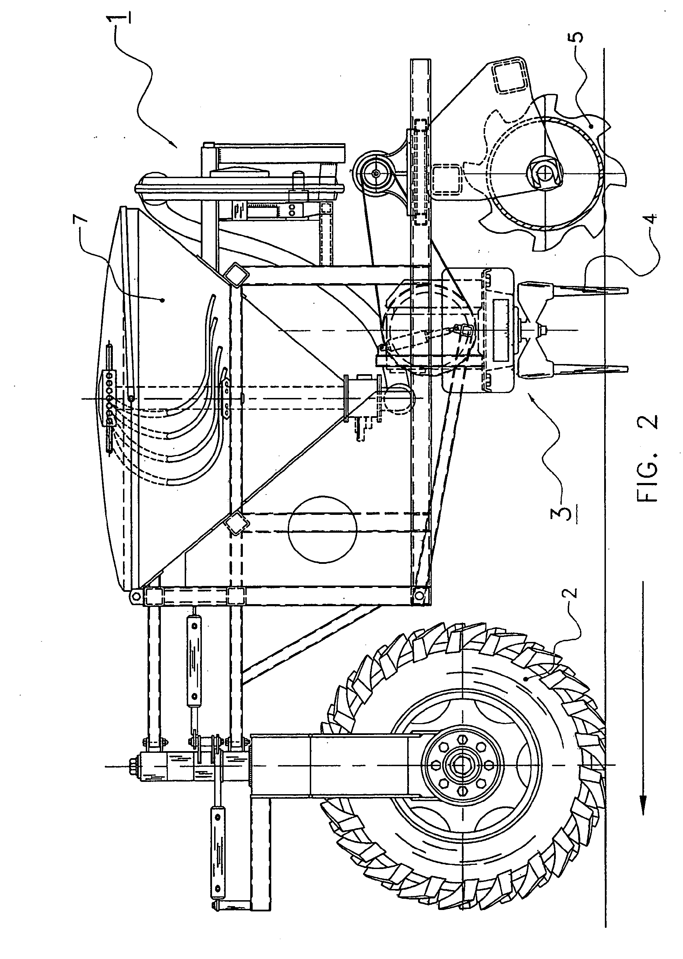

Figure 2 shows schematically in side view the device for performing a soil preparation according to Figure 1.

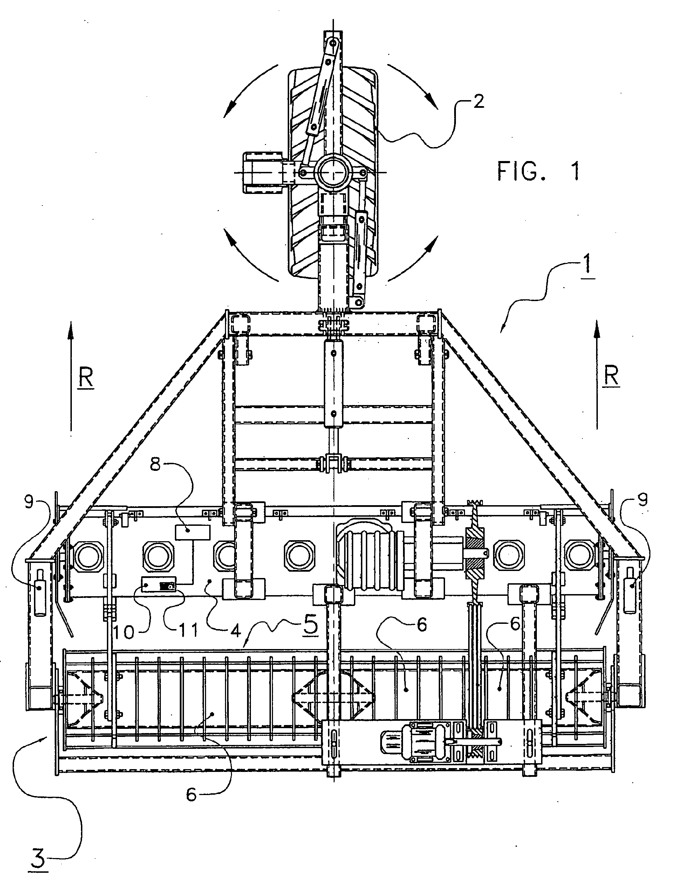

Figure 1 shows schematically in plan view a device for performing a soil preparation according to the invention. The device 1 can be displaced autonomously. It is pointed out here that an autonomous machine, i.e. a machine that does not require a driver for being displaced, is known per se and will therefore not be set out here in further detail for the sake of simplicity of the description. The autonomous agricultural machine 1 is suitable for performing a soil preparation on an agricultural parcel.

In the embodiment shown the autonomous agricultural machine 1 comprises only one wheel 2, said one wheel ensuring the drive and the steering. The device 1 comprises a harrow-unit 3 comprising a rotary harrow 4 and a packer roller 5 that is subdivided into a number of packer-roller-units 6 that are rotatable separately from each other. The device also comprises a sowing-unit 7 for sowing seed. It is pointed out here that sowing-units that are known per se may be used.

The autonomous soil-preparing machine 1 further comprises a position-determining system 8 for determining the position of the machine 1, such as a GPS-system known per se. The machine may additionally be provided with a boundary-detecting system 9 (for example one or more cameras) for detecting a boundary of already prepared soil. A control device 10 controls the autonomous device 1 with the aid of data from the position-determining system and/or the boundary-detecting system, and other relevant data that may either be inputted previously or be measured momentarily by several measuring-units. Such properties may be device-related parameters and/or environment-related parameters. Quantity of fuel, oil temperature, number of revolutions of the rotary harrow, tyre pressure, ambient temperature, quantity of rain, etc. may for example be measured.

For inputting data, for example setting the desired working depth, there is provided an input device 11 (for example a keyboard).

The route-information system may be provided with a memory for containing position-related data with respect to the agricultural parcel to be prepared. The positions of storage containers may in particular be stored in the memory. Said data may be stored for example in the form of a ground plan.

The cameras 9 may also be used (in combination with picture recognition software) as protecting element for protecting the device, so that collisions with moving obstacles are prevented.

According to the invention there is thus provided an autonomous device for harrowing the soil and putting seed in the soil, so that immediately after the soil preparation sowing can take place in one working run. Of course, on one parcel several robot-harrows can (co-)operate for performing the preparations.

The device has one relatively large drive wheel and for example a fuel-motor. The rotary harrow comprises a gear wheel channel with drive and teeth and an adjusting roller (constituted by the packer roller). The adjusting roller and the wheel of the device form together the wheel set.

The duties of the device may be elaborated in advance by the user in a preparation-map that is inputted in the control device by means of the input device. The control device gives the autonomous harrow the correct orders and monitors the correct execution thereof. The control device may form part of the autonomous harrow. However, if several autonomous harrows are used, one of them may have the duty of exercising said function besides the soil preparation. The control device may also be positioned in another location, such as for example in a farmhouse, a storehouse or the like.

As the occasion arises, the user can put the autonomous harrow(s) into and out of operation by means of a user-interface. After having put the device(s) out of operation, the user can repair malfunctions, if any, test functions or change settings.

Stocks of fuel and seed, if desired, can be made available in a place on and/or beside the parcel. The autonomous harrow can automatically replenish its operating stocks or indicate that the user has to do this.

If the control device breaks down, the autonomous harrows are automatically also put out of operation.

The preparation-relevant parameters may be measured by the measuring means, while, in this connection, preparation-relevant parameters in the broadest sense of the word are meant.

The invention may be applied to measuring means for measuring inter alia: weather situation (rain, wind, temperature), stock data, device-related parameters (such as fuel stock, battery level, working settings, such as working depth, sort of seed, etc.), soil conditions, moving obstacles.

Depending on the measured values, the control device can control the preparation (stop the preparation, if desired) or give an alarm to the owner of the device. Malfunctions can then be registered in a particular memory. These values are preferably determined real-time. The measured values can be kept permanently, but from a point of view of reduction of memory capacity the oldest data are preferably replaced by new data.

The preparation data to be inputted may be inputted per parcel in the form of preparation-maps. The preparation-map may be formed as follows:
- contours with a code(colour)
- working depth with different levels
- crumbling of soil
- metering of seed for the different levels
- extra preparation data that may be inputted:
   GPS-positions of stocks (fuel, seed)
- preparation pattern: in which route pattern should the parcel be prepared: in circles, zigzagging from a side, subdividing into blocks.

## Claims

1. A device for autonomously performing a soil preparation, which device can be displaced autonomously, the device being provided with a wheel for driving and steering the device and with a harrow-unit for harrowing the soil, **characterized in that** the device comprises only one wheel.

2. A device as claimed in claim 1, **characterized in that** the harrow-unit is provided with a packer roller that is subdivided into a number of packer-roller-units that are rotatable separately from each other.

3. A device as claimed in any one of the preceding claims, **characterized in that** the harrow-unit is provided with a rotary harrow.

4. A device as claimed in any one of the preceding claims, **characterized in that** the device is provided with a sowing-unit for sowing seed.

5. A device as claimed in any one of the preceding claims, **characterized in that** the device is provided with protecting means for protecting the device.

6. A device as claimed in any one of the preceding claims, **characterized in that** the device is provided with a position-determining system for determining the position of the device, with a boundary-detecting system for detecting a boundary of prepared soil, and with a control device for controlling the device with the aid of data from the position-determining system and/or the boundary-detecting system.

7. A device as claimed in claim 6, **characterized in that** the device is provided with at least one measuring-unit for measuring a property chosen from the group consisting of: device-related parameters and environment-related parameters.

8. A device as claimed in claim 6 or 7, **characterized in that** the control device is provided with an input device for inputting data.

## Patentansprüche

1. Vorrichtung zum autonomen Durchführen einer Bodenbearbeitung, wobei die Vorrichtung autonom verlagert werden kann, wobei die Vorrichtung mit einem.Rad zum Antreiben und Lenken der Vorrichtung und mit einer Eggeneinheit zum Eggen des Bodens versehen ist,
**dadurch gekennzeichnet, dass** die Vorrichtung nur ein Rad umfasst.

2. Vorrichtung nach Anspruch 1,
**dadurch gekennzeichnet, dass** die Eggeneinheit mit einer Packerwalze versehen ist, die in eine Anzahl von Packerwalzen-Einheiten unterteilt ist, die getrennt voneinander drehbar sind.

3. Vorrichtung nach einem der vorhergehenden Ansprüche,
**dadurch gekennzeichnet, dass** die Eggeneinheit mit einer Kreiselegge versehen ist.

4. Vorrichtung nach einem der vorhergehenden Ansprüche,
**dadurch gekennzeichnet, dass** die Vorrichtung mit einer Säeinheit zum Aussäen von Saatgut versehen ist.

5. Vorrichtung nach einem der vorhergehenden Ansprüche,
**dadurch gekennzeichnet, dass** die Vorrichtung mit Schutzvorrichtungen zum Schützen der Vorrichtung versehen ist.

6. Vorrichtung nach einem der vorhergehenden Ansprüche,
**dadurch gekennzeichnet, dass** die Vorrichtung mit einem Positionsermittlungssystem zum Ermitteln der Position der Vorrichtung, mit einem Begrenzungsdetektionssystem zum Detektieren einer Begrenzung des bearbeiteten Bodens und mit einer Steuervorrichtung versehen ist, um die Vorrichtung mit Hilfe von Daten von dem Positionsermittlungssystem und/oder dem Begrenzungsdetektionssystem zu steuern.

7. Vorrichtung nach Anspruch 6,
**dadurch gekennzeichnet, dass** die Vorrichtung mit mindestens einer Messeinheit zum Messen einer Eigenschaft versehen ist, die aus der Gruppe der vorrichtungsspezifischen Parameter und der umgebungsspezifischen Parameter ausgewählt ist.

8. Vorrichtung nach Anspruch 6 oder 7,
**dadurch gekennzeichnet, dass** die Steuervorrichtung mit einer Eingabevorrichtung zum Eingeben von Daten versehen ist.

## Revendications

1. Dispositif pour effectuer de manière autonome une préparation de sol, lequel dispositif peut être déplacé de manière autonome, le dispositif étant équipé d'une roue pour entraîner et conduire le dispositif, et d'une herse pour herser le sol, **caractérisé en ce que** le dispositif comprend une seule roue.

2. Dispositif selon la revendication 1, **caractérisé en ce que** la herse est équipée d'un rouleau packer qui est subdivisé en un certain nombre d'éléments de rouleau packer qui peuvent être mis en rotation séparément les uns des autres.

3. Dispositif selon l'une quelconque des revendications précédentes, **caractérisé en ce que** la herse est équipée d'une herse rotative.

4. Dispositif selon l'une quelconque des revendications précédentes, **caractérisé en ce que** le dispositif est équipé d'un semoir pour semer les graines.

5. Dispositif selon l'une quelconque des revendications précédentes, **caractérisé en ce que** le dispositif est équipé de moyens de protection pour protéger le dispositif.

6. Dispositif selon l'une quelconque des revendications précédentes, **caractérisé en ce que** le dispositif est équipé d'un système de détermination de position pour déterminer la position du dispositif, d'un système de détection de limite pour déterminer une limite du sol préparé et d'un dispositif de commande pour commander le dispositif à l'aide de données provenant du système de détermination de position et/ou du système de détection de limite.

7. Dispositif selon la revendication 6, **caractérisé en ce que** le dispositif est équipé d'au moins une unité de mesure pour mesurer une propriété choisie dans le groupe comprenant des paramètres liés au dispositif et des paramètres liés à l'environnement.

8. Dispositif selon la revendication 6 ou 7,
**caractérisé en ce que** le dispositif de commande est équipé d'un dispositif d'entrée pour entrer des données.
